# EUROPEAN PATENT APPLICATION

(11) **EP 1 167 000 A1**
(43) Date of publication of application: **02.01.2002**
(21) Application number: 00830445.3
(22) Date of filing: 26.06.2000
(51) Int. Cl.: B29C 67/24

(54) **Process for manufacturing articles of polymeric material**

(71) Applicant: Tema Technopolymers S.r.l., 24040 Pontirolo Nuovo (Bergamo) (IT)
(72) Inventor: Auci, Pietro, 24040 Verdellino (Bergamo) (IT)
(74) Representative: Sutto, Luca

(57) **Abstract**

A process for manufacturing articles of thermoplastic polymeric material, preferably polyurethane, polyvinyl chloride or acrylic rubber, comprises the following steps: setting a predetermined amount of fluid-phase thermoplastic polymeric material (2) in an injection line (3), introducing at least one primary reactive substance (5) into the fluid-phase polymeric material (2); causing solidification of the fluid-phase polymeric material (2) within a shaping container to define an article (7).

## Description

The present invention relates to a process for manufacturing articles of polymeric material.

It is known that a great variety of chemical substances of polymeric structure are extensively used in the industrial field for the manufacture of different typologies of articles.

Among these chemical substances, particularly appreciated in some production fields are polyurethanes (PUs), polyvinyl chlorides (PVCs) and acrylic rubbers. In fact, these materials are used in a widespread range of production processes because it is possible, depending on the current technical requirements, to select the particular chemical substance enabling articles to be obtained which have the desired physical, mechanical and aesthetic features.

For instance, articles such as shoe soles can be obtained by selecting the particular chemical compositions ensuring high elasticity and flexibility to the finished products, or articles such as tyres for heavy vehicles can be produced by adopting a polyurethane having an elastic behaviour combined with a great resistance to abrasion in contact with road surfaces.

Although polymers available on the market meet many technical requirements, typically each polymer is capable of fulfilling specific technical tasks and its physical properties and performance can be hardly modified. In other words, in spite of the fact that a great number of polymeric chemical compositions are presently available on the market, it is generally necessary to change the polymer typology each time even slightly different technical requirements are to be met. This gives rise to many problems in terms of management, production, logistics.

Referring, by way of example, to a conventional injection moulding process of polyurethane articles, an estimation of the limits of the presently available technologies can be made.

As far as moulding of thermosetting polyurethanes is concerned, two or more chemical components (generally liquid-phase components) are injected and they mutually react giving rise to the polymer and in particular the desired polyurethane.

Generally, starting from injection of the different liquid-phase components into the moulding, the substantial completion of the chemical reactions takes place within a period of time of some minutes (where polyurethanes are concerned, periods of time in the order of two minutes are involved, for example).

It should be pointed out that, in these production processes, the substance at least partly "stabilized" (i.e. having reached a good chemical stability and therefore being not subject to further important reactions varying its physico-mechanical features too much) and the article of manufacture are simultaneously obtained; in other words, definition of the particular type of chemical compound takes place at the same instant that the prefigured article in the mould is obtained.

The known art briefly described above however has some limits.

In fact, a strict correspondence between definition of the stable chemical properties of the polymeric material and achievement of the finished product involves important contraindications in terms of operating flexibility, since the necessity to wait for completion of the polymerisation reactions hinders mass-production or at all events pushes to use complicated machinery provided with several moulds interlocked to several lines of injection of the chemical components; this ultimately leads to a reduction in the net productivity of an industrial plant, and an increase in the working costs and times.

Another important drawback of this production technique consists in that, once the components that must react with each other have been stated, no intervention can take place during the polymerisation process for obtaining a material belonging to the same family but having even slightly different features; this brings to a reduction in the operating flexibility since a variation in the features of the chemical compound constituting the article of manufacture can only be put into practice by changing the components before injection into the mould takes place, which will bring about obvious problems of production interruption, setting up of production lines of greater complexity or stockage of different reactive substances for supply, by turns, to the different production lines.

In an attempt to obviate some of the above mentioned drawbacks at least partly, presently a slightly different production technique is employed which mainly applies in the production field of thermoplastic polyurethane (TPU) objects.

In this case, semifinished products available in the form of granules of the stabilized chemical compound are used which are previously produced following traditional techniques not herein described because they are not of special importance in this context.

These granules are heated so that they reach a fluid aggregation state and the fluid mass thus obtained is pushed into a suitably shaped mould where it is caused to solidify into the desired shape.

It is to be noted that feeding of the melt material is generally accomplished by a duct passed through by a worm screw (also known as Archimedes screw) maintaining the material fluidity by a continuous stirring, while at the same time the material displacement towards the mould is carried out.

Where required, at the worm screw exit an inert filler can be introduced into the fluidified material in order to increase the weight and/or volume of the finished article; at all events, addition of this inert filler does not involve modifications to the polymerisation processes or generally does not cause arising of chemical reactions between the inert filler and the polymeric material, because the latter is already chemically stable.

In such a process embodiment, speed for obtaining the finished product is substantially higher since the processes taking place in the chemically stabilized polymeric material are only of physical nature (in particular, aggregation-state passages are concerned) and therefore do not include chemical polymerisation reactions: this difference from the known art previously described leads to a much more reduced time for reaching the finished product (as far as TPU polyurethanes are concerned, times in the order of some ten seconds are required).

However, this known technique too has some drawbacks.

In fact, the peculiar nature of the fluid thermoplastic polyurethane involves keeping a strong pressure within the worm screw, to prevent formation of clots in the fluid polymeric material and ensure an excellent filling of the mould; obviously, this represents a drawback in terms of running costs and construction complexity of the employed machinery.

In addition, this technique cannot apply in case of processing of not yet chemically stable substances, since the polymerisation reactions would take place already in the worm screw, with clear inconveniences concerning maintenance of the plastic material itself to the fluid state.

In the same manner as already seen above, this production methodology has the drawback that it is bound to the choice of the chemical substance to be admitted upstream of the worm screw; if the properties of the finished article are wished to be changed, a very diversified range of already stabilized thermoplastic polyurethanes is required which will bring about clear disadvantages from the logistic and economic point of view.

In addition to the above, it should be noted that another drawback of this technique is represented by the fact that, since the two techniques are incompatible with each other, there is a further limitation to the operating flexibility which will make it necessary to install different machinery groups to manufacture articles of different nature and/or with different physico-mechanical features.

Under this situation, the technical task underlying the present invention is to devise a process for manufacturing articles of polymeric material, preferably polyurethane, polyvinyl chloride or acrylic rubber, capable of substantially obviating the above mentioned limits.

In particular, within the scope of this technical task, it is an important aim of the invention to devise a process for manufacturing articles of polymeric material capable of ensuring an important operating flexibility, enabling the physico-chemical features of the plastic material to be modified at will.

Another aim of the present invention is to devise a process for manufacturing articles of polymeric material enabling achievement of said production flexibility while at the same time limiting the production times so that a high production is maintained in the industrial plant putting said process into practice.

A further aim of the present invention consists in devising a process for manufacturing articles of polymeric material which is compatible with the machinery of known type so that low costs are involved in the adjustment and adaptation of the production plants.

The technical task mentioned and the aims specified are substantially achieved by a process for manufacturing articles of polymeric material having the features described in the appended claims.

Description of a preferred but not exclusive embodiment of a process for manufacturing articles of polymeric material in accordance with the invention is given hereinafter by way of non-limiting example, with reference to the accompanying drawings, in which:

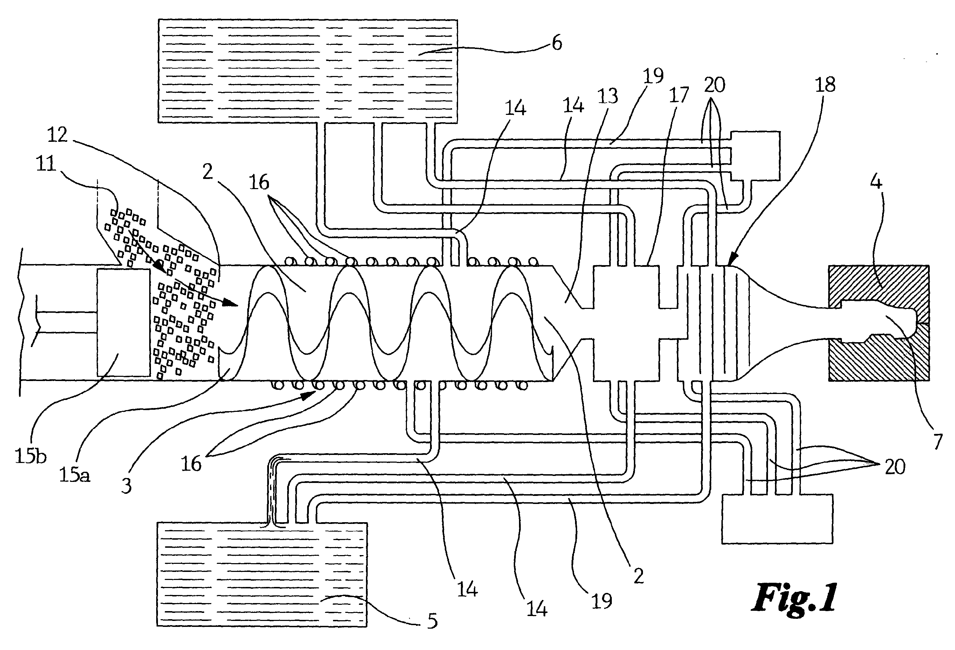

- Fig. 1 is an exploded perspective view of a production plant carrying out the process of the invention;

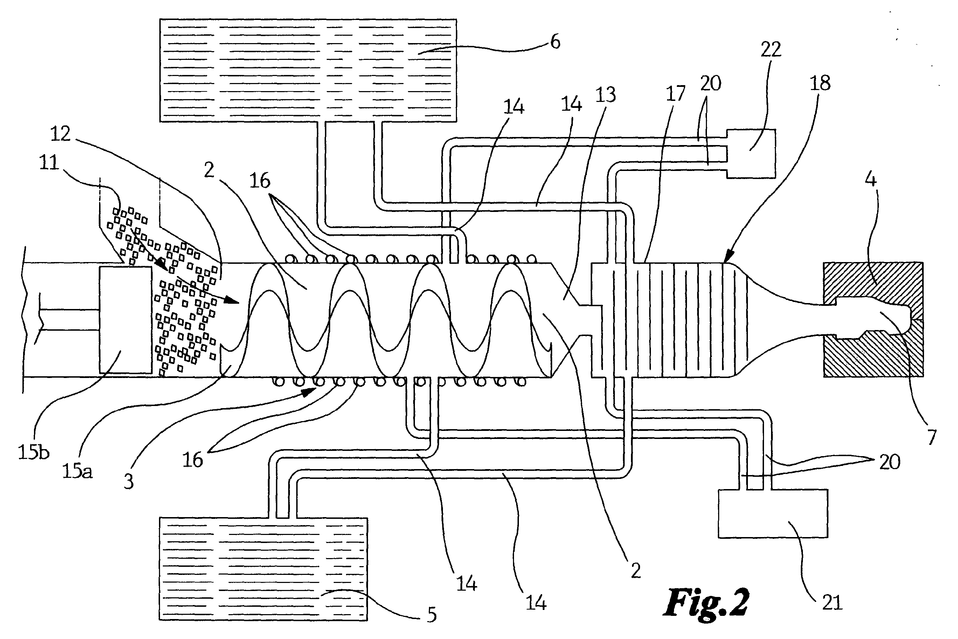

- Fig. 2 shows a first alternative embodiment of the plant in Fig. 1; and

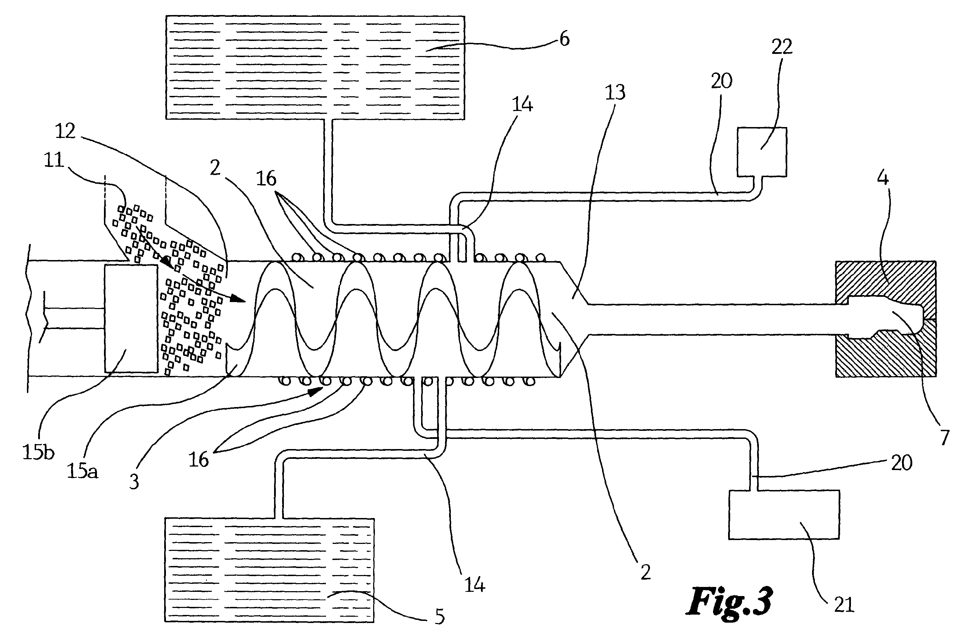

- Fig. 3 shows a second alternative embodiment of the plant in Fig. 1.

Such a production process is preferably employed for manufacturing articles of polyurethane, polyvinyl chloride or acrylic rubber and starts with a preparatory step involving arrangement of a predetermined amount of fluid-phase thermoplastic polymeric material. Conveniently, fluidification of the polymeric material 2 is carried out by heating of the material 2 itself to an appropriate temperature (about 160°C for polyurethane, for example).

This thermoplastic polymeric material 2 is inserted in an injection line 3, routing the material towards a shaping element 4 which is connected to the injection line 3 downstream thereof; in other words, during the process of the invention a step is carried out which consists in introducing the fluid-phase polymeric material 2 into a shaping element of an appropriate geometry (a mould, an extrusion die, or more generally any instrument adapted to give a shape to the material coming out of the injection line 3, depending on requirements).

Advantageously, the operating process of the present invention at this point, or more specifically before the step of causing solidification of the fluid-phase polymeric material 2, involves an operating step consisting in introducing at least one primary reactive substance 5 into the fluid-phase polymeric material 2.

In accordance with the present invention, during the last-mentioned step more than one primary reactive substance 5 can be introduced into the fluid-phase polymeric material 2; where thermoplastic polyurethanes are processed a secondary reactive substance 6 can also be added to material 2; generally any number of different reactive substances can be introduced depending on the physico-chemical features to be reached.

It should be noted that, in accordance with the present invention, the fluid-phase polymeric material 2 is a chemical substance which is substantially chemically stable, i.e. is not internally subject to chemical reactions such as polymerisation reactions that could alter the polymeric architecture of same or reactions of radical chemical groups with air humidity.

However, use of a material 2 which has almost integrally reached its chemical stability is possible, provided it has already defined its polymeric chains. In the last-mentioned case, the residual chemical reactivity of the material 2 is given by the presence of said radical groups (generally isocyanate and/or hydroxyl groups) capable of reacting with substances from the external environment, such as air humidity or the reactive substances introduced during execution of the process of the invention.

After addition of the appropriate number of reactive substances, the process involves the step of making the fluid-phase polymeric material 2 solidify within the shaping container 4; in this manner once the fluid-phase polymeric material 2 has taken a solid aggregation state again (or generally has reached such an internal structure that it can maintain a given shape of its own), an article of manufacture 7 is defined.

Conveniently, the process of the present invention is conceived so that, while the step of introducing the primary reactive substance 5 is being carried out, it may ensure an operating sub-step in which the primary reactive substance 5 (or more generally all the different reactive substances introduced thereinto) is intimately mixed with the fluid-phase polymeric material 2. This intimate-mixing step can advantageously have different consequences from a chemical point of view; in fact, the reactive substances introduced into the material 2 may partly react with said material (in the cases in which some chemical affinity exists, for example) forming bonds of the electrostatic type (Van der Waals bonds) or hydrogen bonds with the polymeric chains of the material 2; in other words, the process in accordance with the present invention can conveniently involve, during the step of introducing the primary reactive substance 5, a sub-step in which at least one of the reactive substances (the primary reactive substance 5, for example) is reacted with the fluid-phase polymeric material 2.

It is also possible that two or more reactive substances introduced into the material 2 should react with each other, forming a chemical compound that will necessarily be intimately interconnected with the polymeric material 2 also through bonds of mechanical nature.

It is also to be noted that the reactive substances that are mixed with each other and with the fluid-phase polymeric material 2 are generally selected from those preferably showing a substantial chemical affinity with each other and with the material 2, so as to enable formation of said chemical bonds; in parallel, it is to be considered that also possible chemical species resulting from reaction of two or more reactive substances intimately mixed within the material 2 generally have chemical affinity with the material 2 itself.

Due to the above mentioned phenomena taking place on a microscopic scale within the fluid-phase polymeric material 2 (suitably added with reactive substances), advantageously a very diversified range of finished or semi-finished products can be obtained which by turns are characterized by different elastic capacities, a more or less marked porosity, more or less marked properties of shape memory and/or kinetic energy absorption, a great variety of hardness degrees, and so on.

In accordance with the present invention, selection of the primary and secondary reactive substances, 5 and 6, can be carried out in a very wide field of chemical families; depending on the properties to be given to article 7, advantageously chemical substances included in the isocyanate, polyol, pre-polymer, peroxide, polybutadiene, polyisopropylene, epoxy or amine groups can be employed to advantage.

Advantageously, when introduction of more than one reactive substance is provided, the method of the invention can involve any introduction sequence of the reactive substances; for instance the primary and secondary reactive substances, 5 and 6, can be introduced simultaneously.

The present process can be advantageously integrated with a production step consisting in introducing a primary catalysing material into the fluid-phase polymeric material 2 to typically modify the reaction speed between the fluid-phase polymeric material 2 and one or more reactive substances 5, 6 introduced thereinto; conveniently, also a secondary catalysing substance can be introduced to at least modify the chemical-reaction speed between a primary reactive substance 5 and at least one secondary reactive substance 6.

Obviously, addition of the primary and/or secondary catalysing substances can be set at the most appropriate moment of the process of the invention, depending on the chemical features of the compounds being processed and the production requirements; for example, a catalysing substance can be introduced either upstream of the injection line 3 or at a point just ahead of the introduction of the reactive substances.

Conveniently, the present process can be integrated by a preparatory step involving preparation of the fluid-phase polymeric material 2.

This step substantially aims at preparing a predetermined amount of chemically-stable polymeric material, i.e. a material having a high degree of chemical stability. For instance, if a given article 7 mainly having a polyurethane composition is wished to be produced, such a chemically stable material will exactly be a thermoplastic polyurethane (TPU) previously produced and having a practically null residual reactivity or, at most, a reactivity limited to the reactions of the isocyanate and/or hydroxy groups with air humidity.

In order to be able to conveniently store this semifinished product so as to have it in stock later and take up the desired amounts of it each time, said product is broken up (by machines of known type) to obtain a variety of granules or similar particles for casting 11. These casting granules 11 can be advantageously stored and the required amounts can be each time picked up from said stock.

Obviously, different qualities of chemically stable polymeric material can be previously produced to be then utilized for different workings.

Turning back to the execution of the process in accordance with the invention, it should be noted that the step of setting the fluid-phase polymeric material 2 comprises a sub-step of liquefying a predetermined amount of casting granules 11; in this way setting of the desired amount of fluid-phase 2 polymeric material to be used in a production cycle is carried out.

It should be noted that liquefaction of the casting granules 11 can be performed prior to the operating step consisting in setting the fluid-phase polymeric material 2 in the injection line 3 or simultaneously therewith; in the last-mentioned case the casting granules 11 are introduced in a solid state into the production apparatus and are suitably brought to their melting temperature through technical modalities better specified in the following.

The industrial apparatus for producing articles of polymeric material and carrying out the process of the present invention is generally denoted by 1 and it substantially comprises an injection line 3, having an entry 12 and an exit 13.

This injection line 3 is conveniently used to move a predetermined amount of fluid-phase polymeric material 2; a shaping element 4 which may be a mould, an extrusion die or generally any other type of instrument depending on the article to be made, is directly or indirectly connected downstream of exit 13.

This industrial apparatus 1 advantageously comprises a predetermined number of primary addition lines 14 which are connected to the injection line 3 ahead of the shaping container 4; each of these primary addition lines 14 is used to introduce a given primary reactive substance 5 into the fluid-phase polymeric material 2; obviously, depending on the current requirements, one or more primary addition lines can be employed, based on the amount and/or number of reactive substances to be blended with the fluid-phase polymeric material 2.

The injection line 3 is substantially made up of a feeder member 15 the function of which is to move the fluid-phase polymeric material 2 towards the shaping container 4. This feeder member 15 comprises at least one worm screw 15a (also referred to as Archimedes screw), coaxially mounted within the injection line. In particular, the worm screw 15a is rotatably mounted around its own axis, to push the fluid-phase polymeric material 2 through its circumvolutions towards the exit and keep homogeneity in the aggregation state of same. Conveniently, a second worm screw 15a may be present and it is mounted in the same manner as the first one within the injection line 3; the presence of two or more worm screws 15a is useful in those cases in which an important amount of polymeric material 2 is to be handled or when viscosity of the material 2 itself is rather high.

The feeder member 15 can further comprise a pusher piston 15b, which is mounted close to the entry 12 of the injection line 3 to push the fluid-phase polymeric material 2 towards the exit of the injection line 3. It should be noted that the axial action of the pusher piston 15b can be employed in coordination with the feeding and mixing action of the worm screws 15a, depending on the current requirements.

As already previously described, the operating liquefaction step of the casting granules 11 can be carried out prior to their being introduced into the injection line 3 or within the injection line 3 itself; in the last-mentioned case, line 3 comprises appropriate heating means 16 consisting of for example a plurality of electric windings wound around line 3, causing melting of the material 2 present therein, by Joule effect. Due to feeding of granules 11 carried out by the worm screws 15a and/or the pusher piston 15b, an aggregation-state passage is obtained which takes place gradually along the injection line 3, in such a manner that at all events the polymeric material 2 close to the exit 13 is in a fluid phase.

Advantageously, the described apparatus can be provided with points for introducing the reactive substances located at different stages of the injection line 3, so as to meet a diversified range of requirements concerning development of the physico-chemical processes to which the material 2 and the reactive substances 5, 6 are submitted.

In particular, the primary addition lines 14 can be connected to the injection line 3 upstream of exit 13, to introduce at least the primary reactive substance into the fluid-phase polymeric material 2 at least at one worm screw 15a; in this way the internal turbulence present in the fluid mass (exactly created by the worm screw 15a) is utilized in order to obtain said intimate mixing between the material 2 and the reactive substances 5, 6.

It is also possible to carry out introduction of the reactive substances 5 directly at the exit 13 of the injection line 3; in this way a mixing pre-chamber 17 can be provided which is connected downstream of the injection line exit and upstream of the shaping container 4; the mixing pre-chamber 17 substantially enables introduction of the different reactive substances 5, 6.

Advantageously, the apparatus may further comprise a mixing member 18 mounted downstream of the injection line 3. This mixing member 18 carries out blending between the fluid-phase polymeric material 2 and the reactive substances 5,6 introduced thereinto; the structure of the mixing member 18 is essentially based on a duct having a tortuous course (i.e. with many loops and bends close to each other), which is passed through by the fluid mass consisting of the material 2 and the reactive substances 5, 6 which are stirred and blended together to achieve the usual intimate mixing.

Obviously, depending on the fluid-motion properties of the different mixing between the material 2 and reactive substances 5, 6, a plant provided with any combination of worm screws 15a, mixing pre-chamber 17 and mixing member 18 can be conceived, provided these construction elements are each time arranged in a manner suitable for the current requirements.

In addition, it is to be noted that the apparatus may in particular comprise a given number of secondary addition lines 19, connected with the mixing member 18 for introduction, depending on the operating requirements, of a predetermined amount of primary 5 and/or secondary active reactive substance 6; conveniently, the secondary addition lines 19 can coexist with the primary addition lines 14, and can be employed simultaneously therewith or excluded from the production process, depending on the operating choices imposed by the physico-chemical features of the chemical substances therein employed.

The concerned apparatus, in line with the process that it must put into practice, can be equipped with a predetermined number of third addition lines 20; these third lines 20 can be connected to either the injection line 3, the mixing pre-chamber 17 or the mixing member 18, in a manner which is not mutually exclusive. The function of the third addition lines 20 is that of introducing at least one primary catalysing substance 21 or a secondary catalysing substance 22 into the apparatus at the appropriate points so as to put into practice the previously described operating step of introducing the catalysing substances.

The invention achieves important advantages.

First of all, it will be recognized that the present production process succeeds in achieving a high speed for obtaining the finished product; this is the result of the fact that the fluid-phase polymeric material has already achieved a chemical stability and that at all events the reactions following its mixing with the reactive substances do not require so long a period of time as that employed in a polymerization operation.

The present process also offers the advantage that the physical properties of the finished article can be easily varied, due to an appropriate selection of the reactive substances introduced before solidification of the fluid-phase polymeric material.

In addition, this process enables a convenient use of known machinery, since the modifications to the plants for carrying out injection of the reactive substances are of easy setting up and low impact.

Finally, the process in question reduces the production costs and greatly simplifies the manufacturing methods, essentially due to the greater operating flexibility and the intrinsic facility for putting it into practice, even when diversified or small-stock productions are concerned.

## Claims

1. A process for manufacturing articles of polymeric material, preferably polyurethane, polyvinyl chloride or acrylic rubber, comprising the following steps:
- setting a predetermined amount of fluid-phase thermoplastic polymeric material (2) ;
- introducing said fluid-phase polymeric material (2) into at least one shaping element (4);
- making the fluid-phase polymeric material (2) solidify to define an article of manufacture (7);
**characterized in that** it further comprises, prior to at least the solidification step, a step of introducing at least one primary reactive substance (5) into the fluid-phase polymeric material (2).

2. A process as claimed in claim 1, **characterized in that** subsequently to the step of introducing said primary reactive substance (5), at least one sub-step of intimately mixing the primary reactive substance (5) with the fluid-phase polymeric material (2) is provided.

3. A process as claimed in claim 1 or 2, **characterized in that** at least part of the primary reactive substance (5) introduced into the material (2) chemically reacts at least with the fluid-phase polymeric material (2).

4. A process as claimed in claim 1, **characterized in that** the primary reactive substance (5) comprises a chemical substance included in the isocyanate group and/or a chemical substance included in the polyol group and/or a chemical substance included in the pre-polymer group and/or a chemical substance included in the peroxide group and/or a chemical substance included in the polybutadiene group and/or a chemical substance included in the polyisopropylene group and/or a chemical substance included in the epoxy group and/or a chemical substance included in the amine group.

5. A process as claimed in anyone of the preceding claims, **characterized in that** it further comprises a step of introducing at least one secondary reactive substance (6) into the fluid-phase polymeric material (2), said secondary substance being inserted prior to said solidification step.

6. A process as claimed in claim 3, **characterized in that** said secondary substance is capable of reacting with said primary substance to give origin to a polymer of chemical affinity with said polymeric material and/or said secondary substance is capable of chemically reacting with said fluid-phase polymeric material.

7. A process as claimed in claim 5, **characterized in that** said secondary reactive substance (6) comprises a chemical substance included in the isocyanate group and/or a chemical substance included in the polyol group and/or a chemical substance included in the pre-polymer group and/or a chemical substance included in the peroxide group and/or a chemical substance included in the polybutadiene group and/or a chemical substance included in the polyisopropylene group and/or a chemical substance included in the epoxy group and/or a chemical substance included in the amine group.

8. A process as claimed in claim 5, **characterized in that** the steps of introducing said primary (5) and secondary (6) reactive substances are carried out simultaneously.

9. A process as claimed in anyone of the preceding claims, **characterized in that** the step of setting the fluid-phase polymeric material (2) comprises at least one step of setting a given amount of thermoplastic polymeric material, preferably a chemically stable polyurethane and more preferably a polyurethane in the form of granules, pellets and similar particles for casting.

10. A process as claimed in claim 8, **characterized in that** the step of setting the fluid-phase polymeric material (2) comprises a sub-step of liquefying a predetermined amount of said casting granules, said step of liquefying said predetermined amount of casting granules (11) being preferably carried out prior to or simultaneously with the step of setting the predetermined amount of fluid-phase polymeric material (2).

11. A process as claimed in anyone of the preceding claims, **characterized in that** it further comprises a step of introducing at least one primary catalysing substance (21) into the fluid-phase polymeric material (2), to modify at least the chemical reaction speeds between the fluid-phase polymeric material (2) and at least one primary (5) and/or secondary (6) reactive substance.

12. A process as claimed in anyone of the preceding claims, **characterized in that** it further comprises a step of introducing at least one secondary catalysing substance (22) into the fluid-phase polymeric material (2), to modify at least the chemical reaction speeds between at least one primary reactive substance (5) and at least one secondary reactive substance (6).

13. An apparatus for manufacturing articles of polymeric material, of the type for carrying out the process as claimed in anyone of the preceding claims, comprising:
- at least one processing line, preferably an injection line (3) having an entry (12) and an exit (13) to move a predetermined amount of fluid-phase polymeric material (2); and
- a shaping element (4) connected thereto downstream of said exit (13);
**characterized in that** it further comprises a predetermined number of primary addition lines (14) connected to the injection line (3) ahead of the shaping container (4) to introduce at least one predetermined primary reactive substance (5) into the fluid-phase polymeric material (2).

14. An apparatus as claimed in claim 13, **characterized in that** the injection line (3) comprises a feeder member (15) to move the fluid-phase polymeric material (2) towards the shaping element (4).

15. An apparatus as claimed in claim 14, **characterized in that** said feeder member (15) comprises at least one, preferably two, worm screws (15a) coaxially mounted within said injection line (3), said worm screw (15a) being rotatably mounted around its own axis to push the fluid-phase polymeric material (2) towards the exit and keep the aggregation-state homogeneity of same.

16. An apparatus as claimed in claim 14, **characterized in that** the feeder member (15) further comprises a pusher piston (15b) mounted close to the entry (12) of the processing line (3) to push the fluid-phase polymeric material (2) towards the exit of said line (3).

17. An apparatus as claimed in anyone of the preceding claims 13 to 16, **characterized in that** the injection line further comprises heating means (16) to bring the fluid-phase polymeric material (2) at least to melting, said means preferably consisting of a plurality of electric windings wound around the line.

18. An apparatus as claimed in anyone of the preceding claims 13 to 17, **characterized in that** said primary addition lines (14) are connected to the injection line (3) upstream of the exit (13), to introduce at least the primary reactive substance into the fluid-phase polymeric material at at least one worm screw.

19. An apparatus as claimed in anyone of claims 13 to 18, **characterized in that** it further comprises at least one mixing pre-chamber (17) connected downstream of the exit of the injection line (3) and upstream of the shaping container (4) to enable introduction of the reactive substances (5), (6).

20. An apparatus as claimed in anyone of the preceding claims 13 to 19, **characterized in that** it further comprises at least one mixing member (18) mounted downstream of the injection line (3) to operate a mixing between the fluid-phase polymeric material (2) and at least the primary (5) and secondary (6) reactive substances.

21. An apparatus as claimed in claim 20, **characterized in that** said mixing member (18) comprises at least one duct having a tortuous course, said duct being passed through by the fluid-phase polymeric material (2) and at least the primary (5) and/or secondary (6) reactive substances to achieve an intimate mutual mixing.

22. An apparatus as claimed in claim 20, **characterized in that** it further comprises a predetermined number of secondary addition lines (19) connected to said mixing member (18) to introduce a predetermined amount of at least the primary active reactive substance (5) thereinto, and preferably to introduce a predetermined amount of the secondary reactive substance (6) thereinto.

23. An apparatus as claimed in anyone of the preceding claims 13 to 22, **characterized in that** it further comprises a predetermined number of third addition lines (20) connected to either the injection line (3), the mixing pre-chamber (17) or the mixing member (18) to introduce at least one primary catalysing substance (21) and/or a secondary catalysing substance (22) thereinto.
